# EUROPEAN PATENT SPECIFICATION

(11) **EP 4 278 256 B1**
(45) Date of publication and mention of the grant of the patent: **05.06.2024**
(21) Application number: 22706144.7
(22) Date of filing: 26.01.2022
(51) Int. Cl.: G06F 9/30, G06F 9/38

(54) **PARALLEL DECODE INSTRUCTION SET COMPUTER ARCHITECTURE WITH VARIABLE-LENGTH INSTRUCTIONS**
RECHNERARCHITEKTUR MIT BEFEHLEN ZUR PARALLELEN DEKODIERUNG UND VARIABLEN BEFEHLSLÄNGEN
ARCHITECTURE INFORMATIQUE D'ENSEMBLE D'INSTRUCTIONS DE DÉCODAGE PARALLÈLE AVEC DES INSTRUCTIONS DE LONGUEUR VARIABLE

(43) Date of publication of application: 22.11.2023
(73) Proprietor: Google LLC, Mountain View, CA 94043 (US)
(72) Inventor: BASEHORE, Derek James, Mountain View, California 94043 (US); SANDERS, Nicholas Jordan, Mountain View, California 94043 (US)
(74) Representative: Marks & Clerk GST
(86) International application number: PCT/US2022/013934
(87) International publication number: WO 2023/146519

(56) References cited:
- EP-A2- 0 994 413
- US-A1- 2004 039 897
- US-A1- 2013 290 677

## Description

The invention relates to decoding variable length instructions.

### BACKGROUND

Instruction set encodings may affect the performance of central processing units (CPUs) with a trade-off of maximizing the amount of work that can be performed in parallel against minimizing program size, which reduces the resources needed to execute a program. Some existing systems use fixed-width instructions, such as 32-bit length instructions. These systems support superscalar computer architectures to fetch and decode multiple instructions simultaneously. The instructions may then be executed in parallel. However, this type of system requires all instructions, including simple instructions, to have the same length. For example, if all instructions are 32 bits, even simple instructions that only require a few bits will be increased to the fixed length of 32 bits, which increases program size by making simple instructions longer than necessary.

Other existing systems use variable-length instructions, which can be difficult to decode in parallel. This difficulty arises because the system needs to decode a first instruction to find the instruction length before the system can determine where a second instruction begins. Although there are techniques to reduce this limitation, these techniques may require significant additional processing or may require a larger area on the silicon chip to implement caches for processing various instructions of different lengths.

US2013290677A1 describes an apparatus having a buffer and a circuit.

EP0994413A2 describes a system for instructing a data processor. US2004039897A1 describes a high cost-performance data processing device and electronic equipment.

### SUMMARY

This document discloses systems and methods related to a parallel decode instruction set computer architecture with variable-length instructions. In some aspects, a hybrid encoding approach is used to avoid wasted resources when performing parallel decoding with variable-length instructions and avoids the inefficient encoding of fixed-length instructions. For example, the hybrid encoding approach may use an instruction format that includes a fixed-length prefix and a variable-length suffix for each instruction.

In various aspects, a processor receives an instruction block for execution. A decoder identifies multiple fixed-length prefixes in the instruction block and identifies multiple variable-length suffixes in the instruction. Each of the multiple fixed-length prefixes can be associated with one of the variable-length suffixes. The instruction block is then executed based on the plurality of variable-length suffixes. By so doing, the described systems and methods may be implemented in a manner that reduces program size and reduces the required area on the silicon chip.

This Summary is provided to introduce simplified concepts for implementing a parallel decode instruction set computer architecture with variable-length instructions. The simplified concepts are further described below in the Detailed Description. This Summary is not intended to identify essential features of the claimed subject matter, nor is it intended for use in determining the scope of the claimed subject matter. The present invention is defined in the appended independent claims, to which reference should be made. Advantageous features are set out in the appended dependent claims.

### BRIEF DESCRIPTION OF THE DRAWINGS

The details of one or more aspects of the described systems and methods are described below. The use of the same reference numbers in different instances in the description and the figures indicate similar elements:
FIG. 1 illustrates an example CPU (Central Processing Unit) capable of executing various instructions;
FIG. 2 illustrates an example instruction block that includes fixed-length prefixes and variable-length suffixes;
FIG. 3 illustrates an example parallel adder capable of determining suffix offsets;
FIG. 4 illustrates an example process for decoding an instruction block having fixed-length prefixes and variable-length suffixes;
FIG. 5 illustrates an example decoding and execution approach for an immediate/register value X (DEXV); and
FIG. 6 illustrates an example jump, decode, and execute X based on an offset (JDEXO).

### DETAILED DESCRIPTION

The described systems and methods provide a parallel decode instruction set computer using variable-length instructions. These instructions may be referred to as hybrid instructions that include a prefix and a suffix. In some aspects, the systems and methods may separate each hybrid instruction into two parts, a prefix, and a suffix. The prefix may contain data that indicates the length of an associated or corresponding suffix. As described herein, each prefix may have a fixed length (e.g., a fixed number of bits) at a fixed location within the prefix portion of the instruction. Each suffix may have a variable length. Thus, each prefix indicates the length (e.g., in bits) of an associated suffix. Other sections of the prefix are optional and may depend on how the particular instruction set is defined. For example, a prefix may include an instruction identifier and data associated with the instruction.

In some aspects of the described systems and methods, portions of the instructions may be decoded in parallel while also providing variable-length instructions. These systems and methods may be implemented in a manner that reduces program size and reduces the required area on the silicon chip.

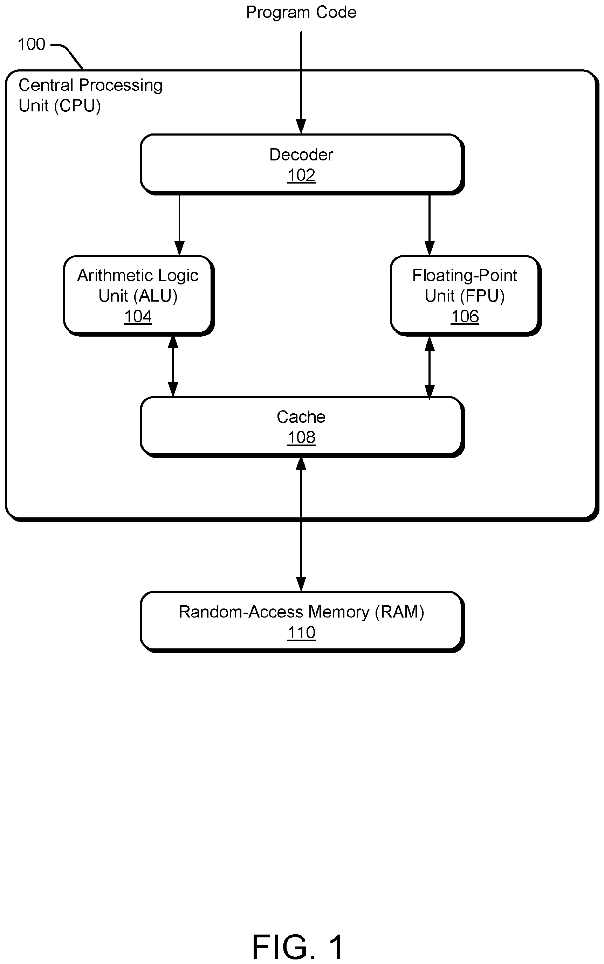

FIG. 1 illustrates an example central processing unit (CPU) 100 capable of executing various instructions. CPU 100 includes various sub-components that perform specific tasks, such as a decoder 102, an arithmetic logic unit (ALU) 104, a floating-point unit (FPU) 106, and a cache 108, which may be coupled to a random-access memory (RAM) 110 or other memory device. Although particular sub-components are shown in CPU 100, alternate embodiments may contain additional sub-components within CPU 100 or may contain fewer sub-components within CPU 100.

In some aspects, program code is received by decoder 102, which decodes instructions in the received program code. ALU 104 performs integer calculations as needed for particular instructions. Integer calculations involve mathematical calculations with integers (i.e., whole numbers). FPU 106 performs floating-point calculations as needed for specific instructions. Floating-point is a technique for representing numbers with a decimal place in a binary form. Floating-point calculations are handled differently than integer calculations.

In some aspects, ALU 104 accesses values in registers and performs a variety of operations on those values. In particular implementations, CPU 100 may include multiple ALUs 104 that can operate independently of one another. Similarly, FPU 106 may access values in registers and perform various operations on those values. In some aspects, CPU 100 may include multiple FPUs 106 that can operate independently of one another. Cache 108 is capable of storing various data being written to RAM 110 or read from RAM 110.

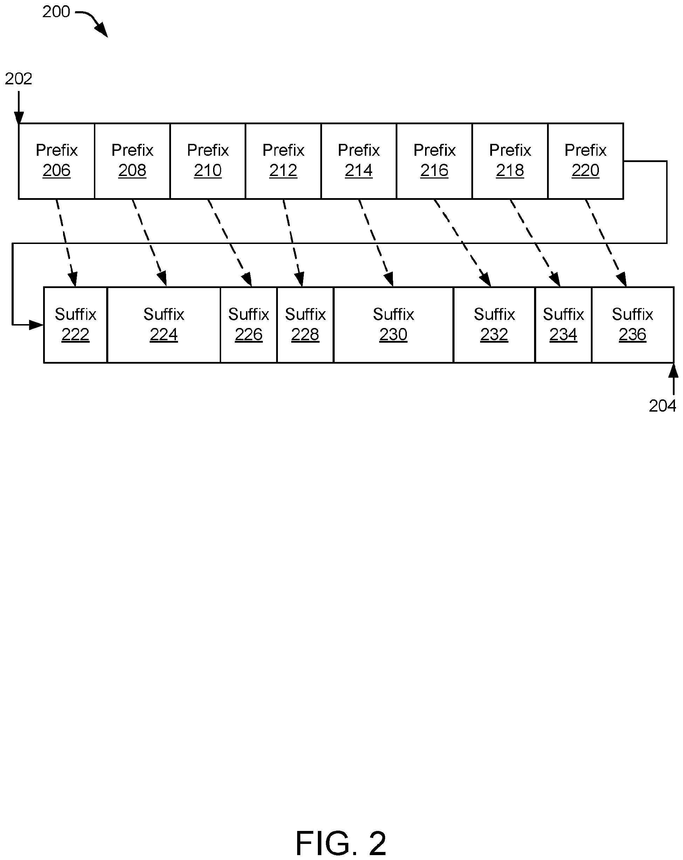

FIG. 2 illustrates an example instruction block 200 that includes fixed-length prefixes (e.g., a fixed number of bits) and variable-length suffixes (e.g., a variable number of bits). As shown in FIG. 2, instruction block 200 is stored in memory and has a starting point 202 and an ending point 204. In some aspects, the instruction block is stored in a contiguous block of memory. In the described example, instruction block 200 has eight blocks of prefixes 206, 208, 210, 212, 214, 216, 218, and 220. In some aspects, prefixes 206-220 are located sequentially in memory. Additionally, instruction block 200 has eight blocks of suffixes 222, 224, 226, 228, 230, 232, 234, and 236. In some aspects, suffixes 222-236 are located sequentially in memory following prefixes 206-220.

As discussed herein, prefixes 206-220 have fixed lengths (as shown in FIG. 2) and suffixes 222-236 have variable lengths. In some aspects, prefixes 206-220 may have a length of 16 bits. In other examples, prefixes 206-220 may have any length. The varying lengths of suffixes 222-236 are shown in FIG. 2. For example, suffix 222 has a shorter length than suffixes 224 and 230. Although eight prefixes 206-220 and eight suffixes 222-236 are shown in FIG. 2, other implementations may contain any number of prefixes and any number of suffixes.

In some aspects, each prefix is associated with a particular suffix. For example, as shown in FIG. 2, prefix 206 is associated with suffix 222, prefix 208 is associated with suffix 224, prefix 210 is associated with suffix 226, and so forth. The split between the two parts of the instruction (prefix and suffix) enables a decoder to load just the data in the first part (prefix) while the data in the second part (suffix) may be loaded for an execution unit without being stored or parsed by the decoder. This approach supports use of a simplified decoder that stores a small, fixed number of bits, thereby reducing the size of the decoder, reducing the power consumption of the decoder, and improving decoder performance.

The configuration of instruction block 200, with eight fixed-length prefixes 206-220 can be decoded in parallel. Since each prefix 206-220 has the same length, it is a simple process to identify the starting location for each prefix in memory. For example, the starting location in memory for prefix 206 is known based on starting point 202. The starting location in memory for the next prefix (208) is easily determined by adding the fixed length (in bits) to prefix 206. This process continues to find the starting location in memory for each prefix 206-220 as well as the starting location in memory for the first suffix 222.

In some implementations, each prefix 206-220 includes data such as an instruction identifier, a length of the associated suffix, and data used by the instruction (e.g., data used by the variable-length suffix when executed). In other implementations, data used by the instruction may be stored in the suffix instead of (or in addition to) the prefix.

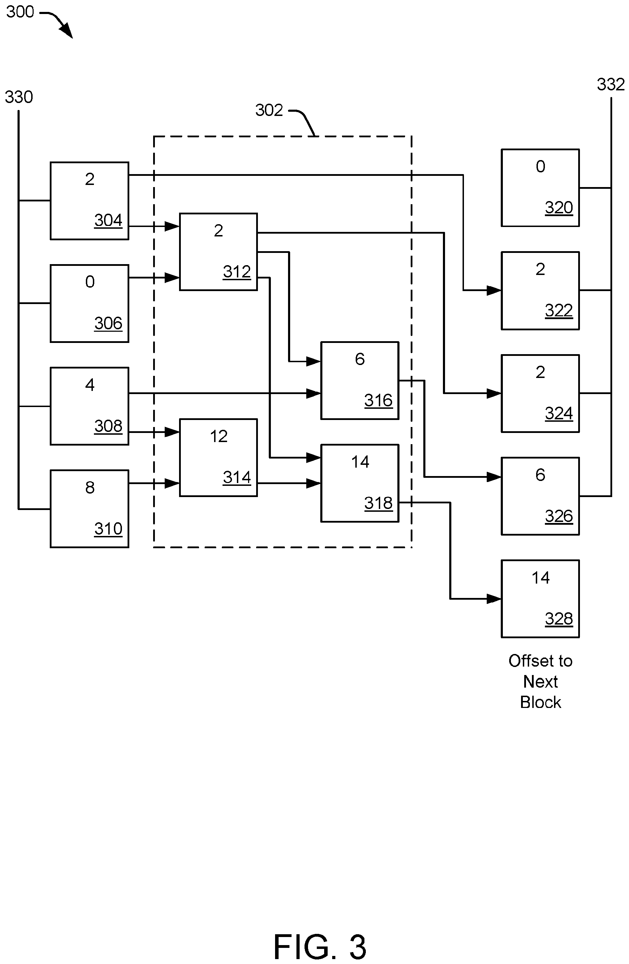

FIG. 3 illustrates an example parallel adder 300 capable of determining suffix offsets. In some aspects, the length of each suffix is known based on information stored in the associated prefix. Thus, the described systems and methods can quickly determine a starting location of each suffix in memory based on the output of parallel adder 300. After the starting location in memory for each prefix and each suffix is determined, CPU 100 has all of the necessary information to execute the instruction. In the example of FIG. 3, parallel adder 300 manages instructions with four prefixes and four suffixes to simplify the example.

In some aspects, the example of FIG. 3 uses the accumulated suffix lengths to determine the starting location of each suffix in memory. In parallel adder 300, multiple additions are performed in parallel to quickly determine the starting location of each suffix. In some aspects, parallel adder 300 receives decoded suffix sizes (e.g., decoded from the prefixes) 330, which are represented as blocks 304, 306, 308, and 310. As shown in FIG. 3, the four decoded suffix sizes are 2 bytes, 0 bytes, 4 bytes, and 8 bytes, respectively.

In some aspects, multiple adder circuits, identified by broken line 302, may include adders 312, 314, 316, and 318. For example, adder 312 adds the values of block 304 (2 bytes) and block 306 (0 bytes) to generate an output of 2 bytes, which is communicated to block 324. The output of adder 312 is also communicated to adders 316 and 318. Blocks 320, 322, 324, 326, and 328 represent an offset for each suffix within the suffix block of the instruction. In particular, block 320 is zero (the starting point of the suffix block). Block 322 is the same as block 304, which is the first offset. Blocks 324 and 326 represent the next two offsets in the suffix block. In some aspects, block 328 represents an offset to the next instruction block. In the example of FIG. 3, 332 represents the offsets for each suffix in the suffix block.

Adder 314 adds the value of block 308 (4 bytes) and block 310 (8 bytes) to generate an output of 12 bytes, which is communicated to adder 318. Adder 316 adds an output of block 308 (4 bytes) to the output of adder 312 (2 bytes) to generate an output of 6 bytes, which is communicated to block 326. Adder 318 adds the output of adder 312 (2 bytes) to the output of adder 314 (12 bytes) to generate an output of 14 bytes, which is communicated to block 328. The example of FIG. 3 may be applied to instructions having any number of prefixes and any number of suffixes. In some aspects, additional adders may be used to determine starting locations of all suffixes in memory.

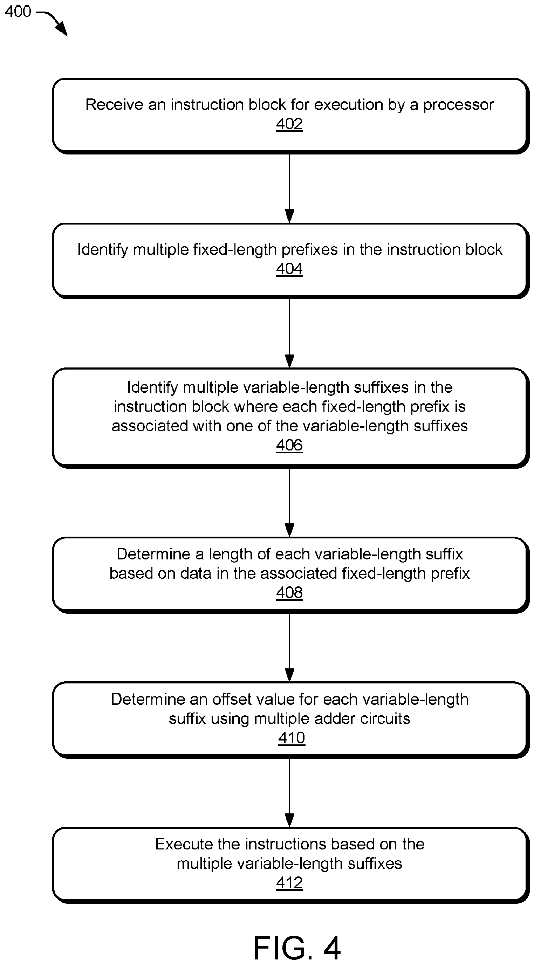

FIG. 4 illustrates an example process 400 for decoding an instruction block having fixed-length prefixes and variable length suffixes. The process 400 is illustrated as a set of blocks that specify operations performed but are not necessarily limited to the order or combinations shown for performing the operations by the respective blocks. Further, any of one or more of the operations may be repeated, combined, reorganized, or linked to provide a wide array of additional and/or alternate methods. The techniques are not limited to performance by one entity or multiple entities operating on one device.

At 402, a device or system receives an instruction block for execution by a processor, such as a CPU. In some aspects, the instruction block is stored in a contiguous block of memory identified with a starting memory location and, in some situations, an ending memory location. At 404, process 400 identifies multiple fixed-length prefixes in the received instruction block. As discussed herein, an offset value of each of the multiple fixed-length prefixes can be determined based on the known offsets between prefixes due to the same fixed length of all prefixes.

At 406, process 400 identifies multiple variable-length suffixes in the instruction block. As discussed herein, each fixed-length prefix is associated with one of the variable-length suffixes. At 408, the length of each variable-length suffix is determined based on data contained in the associated fixed-length prefix. The lengths of the variable-length suffixes are used to determine offset values to the start of the next suffix. At 410, process 400 determines an offset value for each variable-length suffix using multiple adder circuits. As discussed herein, the multiple adder circuits perform parallel addition operations to process the suffix length data in the prefixes and determine the offset value to the start of the next suffix. At 412, process 400 executes the instructions based on the multiple variable-length suffixes.

In some aspects, the systems and methods described herein may create split register sets to ease routing. For example, multiple register sets can be created and associated with different ALUs. In a simple example, two register sets are created and labeled Register Set A and Register Set B. A first group of ALUs may access Register Set A, a second group of ALUs may access Register Set B, and a third group of ALUs may access Register Set A and Register Set B. In particular implementations, any number of register sets may be created. In some aspects, the register sets may be implemented alongside register naming for the physical registers associated with the microarchitecture. This may provide all of the benefits of reduced routing without exposing the added complexity to an ISA (Instruction Set Architecture).

As CPUs scale to larger sizes (e.g., a larger number of cores), they may need an increased number of physical registers to meet the demand for increased routing. The use of multiple register sets discussed above may ease potential routing issues caused by the larger CPUs.

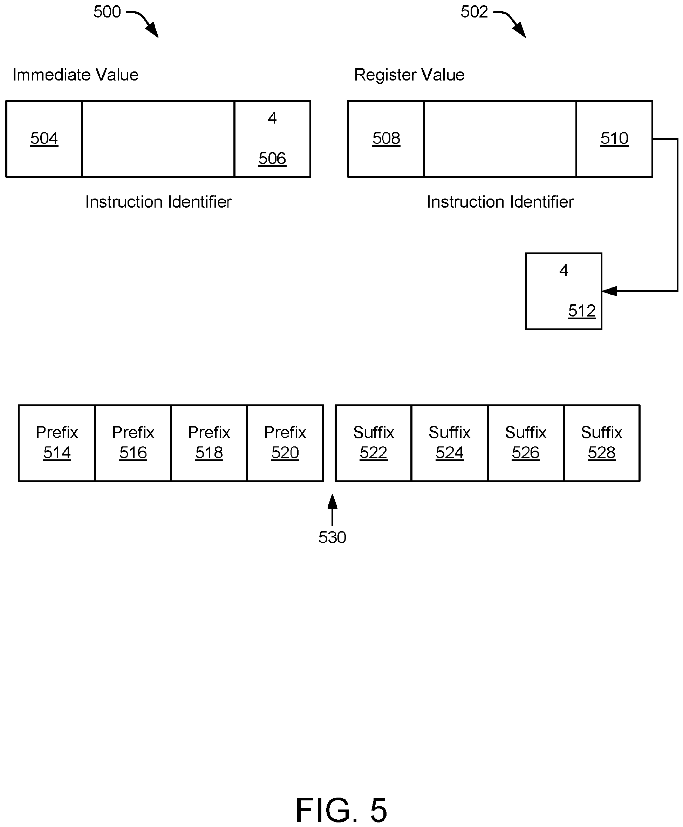

FIG. 5 illustrates an example decoding and execution approach for an immediate/register value X (DEXV). In some aspects, certain instructions do not require decoding. For example, a block of eight instructions may have fewer than eight instructions that actually need to be decoded due to a branch or other situation. Although No-Op instructions may be added to the block to fill the vacancies, that approach needlessly takes up extra space. As described herein, in some aspects, a smaller block size is constructed to avoid wasting unused blocks. In particular implementations, an instruction may modify the fetch and decode activities of the following instruction block.

In some aspects, the split between the two parts of the instruction can be made such that the decoder only needs to load the prefix. Thus, the data in the suffix can be loaded for the execution unit without ever being stored or parsed by the decoder. This approach supports a simplified decoder that stores a low, fixed number of bits, which reduces the size and power consumption of the decoder while improving performance of the decoder.

The example of FIG. 5 illustrates the addition of Decode and Execute X instructions to handle situations where some instructions do not require decoding. The Decode and Execute X instructions are executed as standalone instructions in the prior block of instructions or as part of a branch or jump instruction. Each standalone instruction can have an immediate value (e.g., the value is part of the instruction) that specifies the number of instructions. For jump and branch instructions, an immediate value may be used, but that is not useful when the jump location is, for example, a virtual function. In that situation, there are two options: the X (in Decode and Execute X) can be a register value argument, or the X (in Decode and Execute X) can be based on the offset from the prefix block size.

In a particular example, suppose each prefix is 16 bits (2 bytes) and there are eight prefixes in a block. If the jump address is 16 byte aligned plus 8 bytes, it means the systems and methods described herein can decode and execute four instructions in the next block. Thus, the jump targets need to be memory aligned according to the number of instructions in that block.

In the example of FIG. 5, X=4 with a block size of 8 and a prefix size of 2 bytes (16 bits). As shown in FIG. 5, an immediate value 500 shows an instruction identifier that may be split between a prefix and a suffix. A block 504 identifies a suffix length and a block 506 identifies a following block length (4 in this example). A register value 502 shows an instruction identifier that includes a block 508 identifying a suffix length and a block 510 that identifies a register address. In the example of FIG. 5, the register addressed at block 510 is shown as block 512.

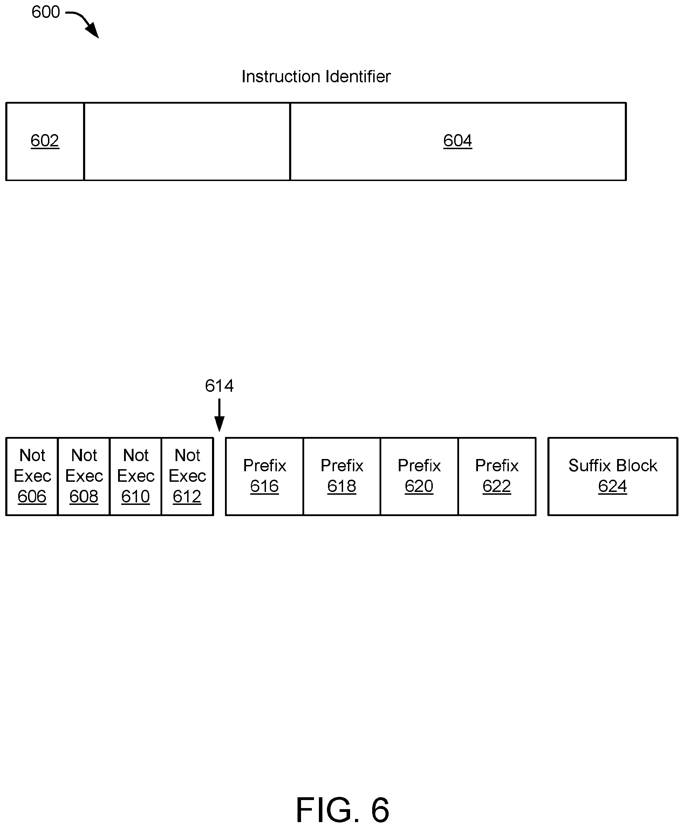

Executing the instruction shown in FIG. 5 with X=4, a block size of 8 and a prefix size of 2 bytes (16 bits) will result in execution of the instruction block shown at the bottom of FIG. 5. That instruction block includes four prefixes 514, 516, 518, and 520. Four instruction prefixes are dropped from the instruction block (as indicated by 530). The instruction block also includes four suffixes 522, 524, 526, and 528. The four suffixes immediately follow prefix 520. In some aspects, for situations that include Jump (JDEXV), an address is appended to the end of the instruction using a memory addressing scheme, such as the embodiment shown in FIG. 6 (discussed below).

FIG. 6 illustrates an example jump, decode, and execute X based on an offset (JDEXO). As shown in FIG. 6, an instruction identifier 600 may be split between a prefix and a suffix. Instruction identifier 600 includes a block 602 that identifies a suffix length, which may be zero. A block 604 identifies a jump target, which may be a memory address defined using a memory addressing scheme that identifies a register value or an immediate value. In some aspects, the memory address may be a value defined in instruction identifier 600 or a globally defined value.

As shown in FIG. 6, a jump target address is identified at 614. In this example, X=4 with a block size of 8 and a prefix size of 2 bytes (16 bits). The jump target address identified at 614 as 8, which is the size of 4 prefixes. Thus, the example of FIG. 6 jumps over four prefixes 606, 608, 610, and 612. The processing begins at prefix 616 and continues to prefix 618, 620, and 622 followed by suffix block 624.

Although the above-described systems and methods are described in the context of various examples of a parallel decode instruction set computer with variable-length instructions, the described systems, devices, apparatuses, and methods are nonlimiting and may apply to other contexts, electronic devices, computing configurations, processor configurations, computing environments, and so forth.

Generally, the components, modules, methods, and operations described herein can be implemented using software, firmware, hardware (e.g., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or in addition, any of the functionality described herein can be performed, at least in part, by one or more hardware logic components, such as, and without limitation, FPGAs, ASICs, ASSPs, SoCs, CPLDs, co-processors, context hubs, motion co-processors, sensor co-processors, or the like.

### Conclusion

Although aspects of the described systems and methods have been described in language specific to features and/or methods, the subject of the appended claims is not necessarily limited to the specific features or methods described. Rather, the specific features and methods are disclosed as example implementations of the described techniques, and other equivalent features and methods are intended to be within the scope of the appended claims. Further, various different aspects are described, and it is to be appreciated that each described aspect can be implemented independently or in connection with one or more other described aspects.

## Claims

1. A method comprising:
receiving (402) an instruction (200) for execution by a processor;
identifying (404), by a decoder (102), a plurality of fixed-length prefixes (206-220) in the instruction (200);
identifying (406), by the decoder (102), a plurality of variable-length suffixes (222-236) in the instruction (200) immediately following the plurality of fixed-length prefixes (206-220) in the instruction (200), wherein each of the plurality of fixed-length prefixes (206-220) is associated with one of the variable-length suffixes (222-236); and
executing (412) the instruction (200) based on the plurality of variable-length suffixes (222-236).

2. The method of claim 1, wherein each of the plurality of fixed-length prefixes (206-220) includes data identifying a length of the associated variable-length suffix.

3. The method of claim 1 or 2, wherein each of the plurality of fixed-length prefixes (206-220) includes data identifying an instruction identifier of the associated variable-length suffix.

4. The method of any one of claims 1 to 3, wherein each of the plurality of fixed-length prefixes (206-220) includes data used by the variable-length suffix when executed.

5. The method of any preceding claim, further comprising determining an offset value associated with each of the plurality of fixed-length prefixes (206-220) based on a fixed length of each prefix.

6. The method of any preceding claim, further comprising determining (410) an offset value associated with each of the plurality of variable-length suffixes (222-236) based on results generated by a plurality of adder circuits (302), and optionally wherein the plurality of adder circuits (302) process suffix length data from the plurality of fixed-length prefixes (206-220) to calculate offset values associated with the plurality of variable-length suffixes (222-236).

7. The method of any preceding claim, further comprising creating a block that contains a portion of the plurality of fixed-length prefixes (206-220) and a portion of the variable-length suffixes (222-236), and optionally further comprising executing the instruction (200) based on the block that contains a portion of the plurality of fixed-length prefixes (206-220) and a portion of the variable-length suffixes (222-236).

8. The method of any preceding claim, further comprising:
identifying at least one fixed-length prefix that does not need execution; and
identifying at least one variable-length suffix associated with the fixed-length prefix, wherein executing (412) the instruction (200) includes jumping over the at least one fixed-length prefix and the at least one variable-length suffix.

9. An apparatus comprising:
a processor; and
a decoder (102) configured to receive an instruction (200) for execution by the processor, wherein the decoder (102) is configured to perform operations comprising:
identifying a plurality of fixed-length prefixes (206-220) in the instruction (200); and
identifying a plurality of variable-length suffixes (222-236) in the instruction (200) immediately following the plurality of fixed-length prefixes (206-220) in the instruction (200), wherein each of the plurality of fixed-length prefixes (206-220) is associated with one of the variable-length suffixes (222-236), and wherein the processor executes the instruction (200) based on the plurality of variable-length suffixes (222-236).

10. The apparatus of claim 9, wherein each of the plurality of fixed-length prefixes (206-220) includes data identifying a length of the associated variable-length suffix, and/or wherein each of the plurality of fixed-length prefixes (206-220) includes data identifying an instruction identifier of the associated variable-length suffix.

11. The apparatus of claim 9 or 10, wherein each of the plurality of fixed-length prefixes (206-220) includes data used by the variable-length suffix when executed.

12. The apparatus of any one of claims 9 to 11, wherein the decoder (102) is further configured to perform operations that determine an offset value associated with each of the plurality of fixed-length prefixes (206-220) based on a fixed length of each prefix.

13. The apparatus of any one of claims 9 to 12, further comprising a plurality of adder circuits (302), wherein the decoder (102) is further configured to perform operations that determine an offset value associated with each of the plurality of variable-length suffixes (222-236) based on results generated by a plurality of adder circuits (302), and optionally wherein the plurality of adder circuits (302) are configured to process suffix length data from the plurality of fixed-length prefixes (206-220) to calculate offset values associated with the plurality of variable-length suffixes (222-236).

14. The apparatus of any one of claims 9 to 13, wherein the decoder (102) is further configured to perform operations for creating a block that contains a portion of the plurality of fixed-length prefixes (206-220) and a portion of the variable-length suffixes (222-236), and optionally wherein the decoder (102) is further configured to perform operations that execute the instruction (200) based on the block that contains a portion of the plurality of fixed-length prefixes (206-220) and a portion of the variable-length suffixes (222-236).

15. The apparatus of any one of claims 9 to 14, wherein the decoder (102) is further configured to perform operations that:
identify at least one fixed-length prefix that does not need execution; and
identify at least one variable-length suffix associated with the fixed-length prefix, wherein executing the instruction (200) includes jumping over the at least one fixed-length prefix and the at least one variable-length suffix.

## Patentansprüche

1. Verfahren, Folgendes umfassend:
Empfangen (402) einer Anweisung (200) zum Ausführen durch einen Prozessor;
Identifizieren (404), durch einen Decoder (102), einer Vielzahl von Präfixen fester Länge (206-220) in der Anweisung (200);
Identifizieren (406), durch den Decoder (102), einer Vielzahl von Suffixen variabler Länge (222-236) in der Anweisung (200), die unmittelbar auf die Vielzahl von Präfixen fester Länge (206-220) in der Anweisung (200) folgen, wobei jedes der Vielzahl von Präfixen fester Länge (206-220) einem der Suffixe variabler Länge (222-236) zugeordnet ist; und
Ausführen (412) der Anweisung (200) auf der Grundlage der Vielzahl von Suffixen variabler Länge (222-236).

2. Verfahren nach Anspruch 1, wobei jedes der Vielzahl von Präfixen fester Länge (206-220) Daten einschließt, die eine Länge des zugeordneten Suffixes variabler Länge identifizieren.

3. Verfahren nach Anspruch 1 oder 2, wobei jedes der Vielzahl von Präfixen fester Länge (206-220) Daten einschließt, die einen Anweisungsidentifikator des zugeordneten Suffixes variabler Länge identifizieren.

4. Verfahren nach einem der Ansprüche 1 bis 3, wobei jedes der Vielzahl von Präfixen fester Länge (206-220) Daten einschließt, die von dem Suffix variabler Länge bei der Ausführung verwendet werden.

5. Verfahren nach einem der vorhergehenden Ansprüche, ferner umfassend das Bestimmen eines Offset-Wertes, der jedem der Vielzahl von Präfixen fester Länge (206-220) zugeordnet ist, basierend auf einer festen Länge jedes Präfixes.

6. Verfahren nach einem der vorhergehenden Ansprüche, ferner umfassend das Bestimmen (410) eines Offset-Wertes, der jedem der Vielzahl von Suffixen variabler Länge (222-236) zugeordnet ist, auf der Grundlage von Ergebnissen, die von einer Vielzahl von Addierschaltungen (302) erzeugt werden, und optional, wobei die Vielzahl von Addierschaltungen (302) Suffixlängendaten aus der Vielzahl von Präfixen fester Länge (206-220) verarbeiten, um Offset-Werte zu berechnen, die der Vielzahl von Suffixen variabler Länge (222-236) zugeordnet sind.

7. Verfahren nach einem der vorhergehenden Ansprüche, ferner umfassend das Erzeugen eines Blocks, der einen Teil der Vielzahl von Präfixen fester Länge (206-220) und einen Teil der Suffixe variabler Länge (222-236) enthält, und optional ferner umfassend das Ausführen der Anweisung (200) auf der Grundlage des Blocks, der einen Teil der Vielzahl von Präfixen fester Länge (206-220) und einen Teil der Suffixe variabler Länge (222-236) enthält.

8. Verfahren nach einem der vorhergehenden Ansprüche, ferner Folgendes umfassend:
Identifizieren mindestens eines Präfixes fester Länge, das nicht ausgeführt werden muss; und
Identifizieren mindestens eines Suffixes variabler Länge, das dem Präfix fester Länge zugeordnet ist, wobei das Ausführen (412) der Anweisung (200) das Springen über das mindestens eine Präfix fester Länge und das mindestens eine Suffix variabler Länge einschließt.

9. Vorrichtung, Folgendes umfassend:
einen Prozessor; und
einen Decoder (102), der konfiguriert ist, um eine Anweisung (200) zur Ausführung durch den Prozessor zu empfangen, wobei der Decoder (102) konfiguriert ist, um Vorgänge durchzuführen, Folgendes umfassend:
Identifizieren einer Vielzahl von Präfixen fester Länge (206-220) in der Anweisung (200); und
Identifizieren einer Vielzahl von Suffixen variabler Länge (222-236) in der Anweisung (200) unmittelbar nach der Vielzahl von Präfixen fester Länge (206-220) in der Anweisung (200), wobei jedes der Vielzahl von Präfixen fester Länge (206-220) einem der Suffixe variabler Länge (222-236) zugeordnet ist, und wobei der Prozessor die Anweisung (200) auf der Grundlage der Vielzahl von Suffixen variabler Länge (222-236) ausführt.

10. Vorrichtung nach Anspruch 9, wobei jedes der Vielzahl von Präfixen fester Länge (206-220) Daten einschließt, die eine Länge des zugeordneten Suffixes variabler Länge identifizieren, und/oder wobei jedes der Vielzahl von Präfixen fester Länge (206-220) Daten einschließt, die einen Anweisungsidentifikator des zugeordneten Suffixes variabler Länge identifizieren.

11. Vorrichtung nach Anspruch 9 oder 10, wobei jedes der Vielzahl von Präfixen fester Länge (206-220) Daten einschließt, die von dem Suffix variabler Länge bei der Ausführung verwendet werden.

12. Vorrichtung nach einem der Ansprüche 9 bis 11, wobei der Decoder (102) ferner konfiguriert ist, um Vorgänge durchzuführen, die einen Offset-Wert bestimmen, der jedem der Vielzahl von Präfixen fester Länge (206-220) zugeordnet ist, basierend auf einer festen Länge jedes Präfixes.

13. Vorrichtung nach einem der Ansprüche 9 bis 12, ferner umfassend eine Vielzahl von Addierschaltungen (302), wobei der Decoder (102) ferner konfiguriert ist, um Vorgänge durchzuführen, die einen Offset-Wert bestimmen, der jedem der Vielzahl von Suffixen variabler Länge (222-236) zugeordnet ist, auf der Grundlage von Ergebnissen, die von einer Vielzahl von Addierschaltungen (302) erzeugt werden, und optional wobei die Vielzahl von Addierschaltungen (302) konfiguriert sind, um Suffixlängendaten aus der Vielzahl von Präfixen fester Länge (206-220) zu verarbeiten, um Offset-Werte zu berechnen, die der Vielzahl von Suffixen variabler Länge (222-236) zugeordnet sind.

14. Vorrichtung nach einem der Ansprüche 9 bis 13, wobei der Decoder (102) ferner konfiguriert ist, um Vorgänge zum Schaffen eines Blocks durchzuführen, der einen Teil der Vielzahl von Präfixen fester Länge (206-220) und einen Teil der Suffixe variabler Länge (222-236) enthält, und optional wobei der Decoder (102) ferner konfiguriert ist, um Vorgänge durchzuführen, die die Anweisung (200) auf der Grundlage des Blocks ausführen, der einen Teil der Vielzahl von Präfixen fester Länge (206-220) und einen Teil der Suffixe variabler Länge (222-236) enthält.

15. Vorrichtung nach einem der Ansprüche 9 bis 14, wobei der Decoder (102) ferner konfiguriert ist, um Vorgänge durchzuführen, die:
mindestens ein Präfix fester Länge, das nicht ausgeführt werden muss, identifizieren; und
mindestens ein Suffix variabler Länge, das dem Präfix fester Länge zugeordnet ist, identifizieren, wobei das Ausführen der Anweisung (200) das Springen über das mindestens eine Präfix fester Länge und das mindestens eine Suffix variabler Länge einschließt.

## Revendications

1. Procédé comprenant :
la réception (402) d'une instruction (200) à exécuter par un processeur ;
l'identification (404), par un décodeur (102), d'une pluralité de préfixes à longueur fixe (206-220) dans l'instruction (200) ;
l'identification (406), par le décodeur (102), d'une pluralité de suffixes à longueur variable (222-236) dans l'instruction (200) immédiatement après la pluralité de préfixes à longueur fixe (206-220) dans l'instruction (200), dans lequel chacun de la pluralité de préfixes à longueur fixe (206-220) est associé à un des suffixes à longueur variable (222-236) ; et
l'exécution (412) de l'instruction (200) sur la base de la pluralité de suffixes à longueur variable (222-236).

2. Procédé selon la revendication 1, dans lequel chacun de la pluralité de préfixes à longueur fixe (206-220) inclut des données identifiant une longueur du suffixe à longueur variable associé.

3. Procédé selon la revendication 1 ou 2, dans lequel chacun de la pluralité de préfixes à longueur fixe (206-220) inclut des données identifiant un identificateur d'instruction du suffixe à longueur variable associé.

4. Procédé selon l'une quelconque des revendications 1 à 3, dans lequel chacun de la pluralité de préfixes à longueur fixe (206-220) inclut des données utilisées par le suffixe à longueur variable lorsqu'elles sont exécutées.

5. Procédé selon l'une quelconque des revendications précédentes, comprenant en outre la détermination d'une valeur de décalage associée à chacun de la pluralité de préfixes à longueur fixe (206-220) sur la base d'une longueur fixe de chaque préfixe.

6. Procédé selon l'une quelconque des revendications précédentes, comprenant en outre la détermination (410) d'une valeur de décalage associée à chacun de la pluralité de suffixes à longueur variable (222-236) sur la base de résultats générés par une pluralité de circuits additionneurs (302), et facultativement dans lequel la pluralité de circuits additionneurs (302) traitent des données de longueur de suffixe à partir de la pluralité de préfixes à longueur fixe (206-220) pour calculer des valeurs de décalage associées à la pluralité de suffixes à longueur variable (222-236).

7. Procédé selon l'une quelconque des revendications précédentes, comprenant en outre la création d'un bloc qui contient une partie de la pluralité de préfixes à longueur fixe (206-220) et une partie des suffixes à longueur variable (222-236), et facultativement comprenant en outre l'exécution de l'instruction (200) sur la base du bloc qui contient une partie de la pluralité de préfixes à longueur fixe (206-220) et une partie des suffixes à longueur variable (222-236).

8. Procédé selon l'une quelconque des revendications précédentes, comprenant en outre :
l'identification d'au moins un préfixe à longueur fixe qui ne nécessite aucune exécution ; et
l'identification d'au moins un suffixe à longueur variable associé au préfixe à longueur fixe, dans lequel l'exécution (412) de l'instruction (200) inclut le franchissement de l'au moins un préfixe à longueur fixe et de l'au moins un suffixe à longueur variable.

9. Appareil comprenant :
un processeur ; et
un décodeur (102) configuré pour recevoir une instruction (200) à exécuter par le processeur, dans lequel le décodeur (102) est configuré pour effectuer des opérations comprenant :
l'identification d'une pluralité de préfixes à longueur fixe (206-220) dans l'instruction (200) ; et
l'identification d'une pluralité de suffixes à longueur variable (222-236) dans l'instruction (200) immédiatement après la pluralité de préfixes à longueur fixe (206-220) dans l'instruction (200), dans lequel chacun de la pluralité de préfixes à longueur fixe (206-220) est associé à un des suffixes à longueur variable (222-236), et dans lequel le processeur exécute l'instruction (200) sur la base de la pluralité de suffixes à longueur variable (222-236).

10. Appareil selon la revendication 9, dans lequel chacun de la pluralité de préfixes à longueur fixe (206-220) inclut des données identifiant une longueur du suffixe à longueur variable associé, et/ou dans lequel chacun de la pluralité de préfixes à longueur fixe (206-220) inclut des données identifiant un identificateur d'instruction du suffixe à longueur variable associé.

11. Appareil selon la revendication 9 ou 10, dans lequel chacun de la pluralité de préfixes à longueur fixe (206-220) inclut des données utilisées par le suffixe à longueur variable lorsqu'elles sont exécutées.

12. Appareil selon l'une quelconque des revendications 9 à 11, dans lequel le décodeur (102) est configuré en outre pour réaliser des opérations qui déterminent une valeur de décalage associée à chacun de la pluralité de préfixes à longueur fixe (206-220) sur la base d'une longueur fixe de chaque préfixe.

13. Appareil selon l'une quelconque des revendications 9 à 12, comprenant en outre une pluralité de circuits additionneurs (302), dans lequel le décodeur (102) est en outre configuré pour réaliser des opérations qui déterminent une valeur de décalage associée à chacun de la pluralité de suffixes à longueur variable (222-236) sur la base de résultats générés par une pluralité de circuits additionneurs (302), et facultativement dans lequel la pluralité de circuits additionneurs (302) sont configurés pour traiter des données de longueur de suffixe à partir de la pluralité de préfixes à longueur fixe (206-220) pour calculer des valeurs de décalage associées à la pluralité de suffixes à longueur variable (222-236).

14. Appareil selon l'une quelconque des revendications 9 à 13, dans lequel le décodeur (102) est en outre configuré pour réaliser des opérations permettant de créer un bloc qui contient une partie de la pluralité de préfixes à longueur fixe (206-220) et une partie des suffixes à longueur variable (222-236), et facultativement dans lequel le décodeur (102) est en outre configuré pour réaliser des opérations qui exécutent l'instruction (200) sur la base du bloc qui contient une partie de la pluralité de préfixes à longueur fixe (206-220) et une partie des suffixes à longueur variable (222-236).

15. Appareil selon l'une quelconque des revendications 9 à 14, dans lequel le décodeur (102) est en outre configuré pour réaliser des opérations qui :
identifient au moins un préfixe à longueur fixe qui ne nécessite aucune exécution ; et
identifient au moins un suffixe à longueur variable associé au préfixe à longueur fixe,
dans lequel l'exécution de l'instruction (200) inclut le franchissement de l'au moins un préfixe à longueur fixe et de l'au moins un suffixe à longueur variable.
